# EUROPÄISCHE PATENTSCHRIFT

(11) **EP 1 288 109 B1**
(45) Veröffentlichungstag und Bekanntmachung des Hinweises auf die Patenterteilung: **23.11.2005**
(21) Anmeldenummer: 02014207.1
(22) Anmeldetag: 26.06.2002
(51) Int. Cl.: B62D 25/08, B62D 29/00, B62D 21/15

(54) **Kraftfahrzeug mit einem in einem Fahrzeugendbereich angeordneten Aufnahmeraum**
Vehicle with receiving space arranged in a vehicle end region
Véhicule avec espace de réception arrangé dans une région d'extémité de véhicule

(30) Priorität: 18.08.2001 DE 10140674
(43) Veröffentlichungstag der Anmeldung: 05.03.2003
(73) Patentinhaber: Dr.Ing. h.c.F. Porsche Aktiengesellschaft, 70435 Stuttgart (DE)
(72) Erfinder: Adamski, Pawel, 72218 Wildberg (DE)

(56) Entgegenhaltungen:
- EP-A- 0 255 749
- EP-A- 0 847 912
- DE-A- 3 000 666

## Beschreibung

Die Erfindung bezieht sich auf ein Kraftfahrzeug mit einem in einem Fahrzeugendbereich angeordneten Aufnahmeraum, gemäß Oberbegriff des Anspruch 1.

Ein gattungsbildendes Kraftfahrzeug ist der EP 0 255 749 A1 zu entnehmen. Dieses Fahrzeug besitzt einen vorderen oder hinteren Fahrzeugendbereich, in dem ein Aufnahmeraum angeordnet ist, der als Wanne ohne Stirnwand ausgebildet ist, die als Aufprall-Deformationselement wirken kann. Die Wanne ist zudem rückwandfrei ausgeführt sowie mit ihrem rückwandfreien Ende mit einem Aufbau, beispielsweise der Schottwand, des Kraftfahrzeugs verbunden. Die Wanne ist aus einem Sandwich-Material hergestellt, welches zwei Blechtafeln und ein dazwischen angeordnetes wellblechartiges Element umfasst. Zusätzlich weist die Wanne kastenförmige Träger auf. Nachteilig erscheint die aufwendige Zusammensetzung der Wanne aus den Blechtafeln, dem Wellblechelement und den kastenförmigen Trägern.

Ein Kraftfahrzeug ist aus der DE 30 00 666 A1 bekannt. Es besitzt als Aufnahmeraum einen Kofferraum, der von einer Wanne gebildet wird, die in einem Fahrzeugendbereich angeordnet und aus Kunststoff hergestellt ist. Die Seitenwände des Kofferraums sind Blechteile. Die Wanne ist zwischen zwei mit Abstand zueinander liegenden Längsträgern und einem die Enden der Längsträger verbindenden Querträger angeordnet, wobei diese Träger üblicherweise aus Metall gefertigt sind.

Die EP 0 847 912 A1 beschreibt einen unterhalb eines Motors eines Kraftfahrzeugs angeordneten Unterfahrschutz bzw. eine Motorschutzwanne, die somit im vorderen Fahrzeugendbereich angeordnet und aus einem faserverstärkten Kunststoff hergestellt ist.

Die EP 0 255 749 A1 befasst sich mit einem Kraftfahrzeug, welches als Leichtbaufahrzeug mit einer selbsttragenden Karosserie aus faserverstärktem Kunststoff ausgeführt ist. Die dafür vorgesehenen Karosserieelemente bilden eine Bodenwanne, die einstückig mit einem vorderen, einem mittleren und einem hinteren Bereich ausgeführt ist.

Aufgabe der Erfindung ist es, ein Kraftfahrzeug der eingangs genannten Art zu vereinfachen und bezüglich Gewicht zu optimieren.

Gelöst wird diese Aufgabe mit einem Kraftfahrzeug, das die in Anspruch 1 genannten Merkmale umfasst. Weitere, die Erfindung vorteilhaft ausgestaltende Merkmale sind in den Unteransprüchen angegeben.

Die mit der Erfindung hautsächlich erzielten Vorteile sind darin zu sehen, dass das Kraftfahrzeug im Fahrzeugendbereich ohne deformierbare Längsträger auskommt, da die aus dem faserverstärkten Kunststoff hergestellte Wanne als Aufprall - Deformationselement wirkt. Durch die Verwendung des faserverstärkten Kunststoffs wird also nicht nur wegen des Materials Gewicht eingespart, sondern vielmehr auch dadurch, dass - wie bereits erwähnt - auf die Längsträger aus Metall verzichtet werden kann. Außerdem ist vorteilhaft, dass das Aufprall - Deformationselement, also die Wanne, als Aufnahmeraum für Gepäck, Fahrzeugteile oder dgl. dient. Die Faserverstärkung des Kunststoffs kann als Kohlenstoff- und/oder Glasfaser ausgeführt sein.

Nach einer Weiterbildung mit den in Anspruch 7 genannten Merkmalen ist vorteilhaft, dass auf den üblicherweise verwendeten Stoßfängerträger (Querträger) verzichtet werden kann. Der Stoßfänger wird nach der Erfindung an den in der Wanne eingesetzten Anbindungsmitteln befestigt. Somit ermöglicht die aus dem faserverstärkten Kunststoff hergestellte Wanne, insbesondere deren Stirnwand, die Befestigung des Stoßfängers.

Die Wanne kann einstückig (Anspruch 11) oder, wie in Anspruch 12 angegeben, mehrteilig ausgeführt sein, wobei die mehrteilige Ausgestaltung insbesondere bei komplexen Wannenkonturen Verwendung findet.

Die Befestigung der Wanne am Fahrzeugaufbau kann - gemäß Anspruch 16 - über einen Zwischenrahmen erfolgen, der insbesondere aus Aluminium, insbesondere Aluminiumguss, hergestellt ist. Somit kann die den Aufnahmeraum bildende Wanne einfach mit dem Aufbau verbunden werden. Denkbar wäre es jedoch auch, die Wanne unmittelbar an dem Aufbau festzulegen.

Die Erfindung wird nachfolgend anhand von Ausführungsbeispielen mit Bezug auf die Zeichnung näher erläutert.

Es zeigen:
- Fig. 1: ausschnittweise ein Kraftfahrzeug mit einem in der Frontpartie des Fahrzeugs vorgesehenen Aufnahmeraum,
- Fig. 2: in Explosionsdarstellung eine mehrteilige, den Aufnahmeraum bildende Wanne und
- Fig. 3: eine den Aufnahmeraum bildende Wanne in einteiliger Ausführung.

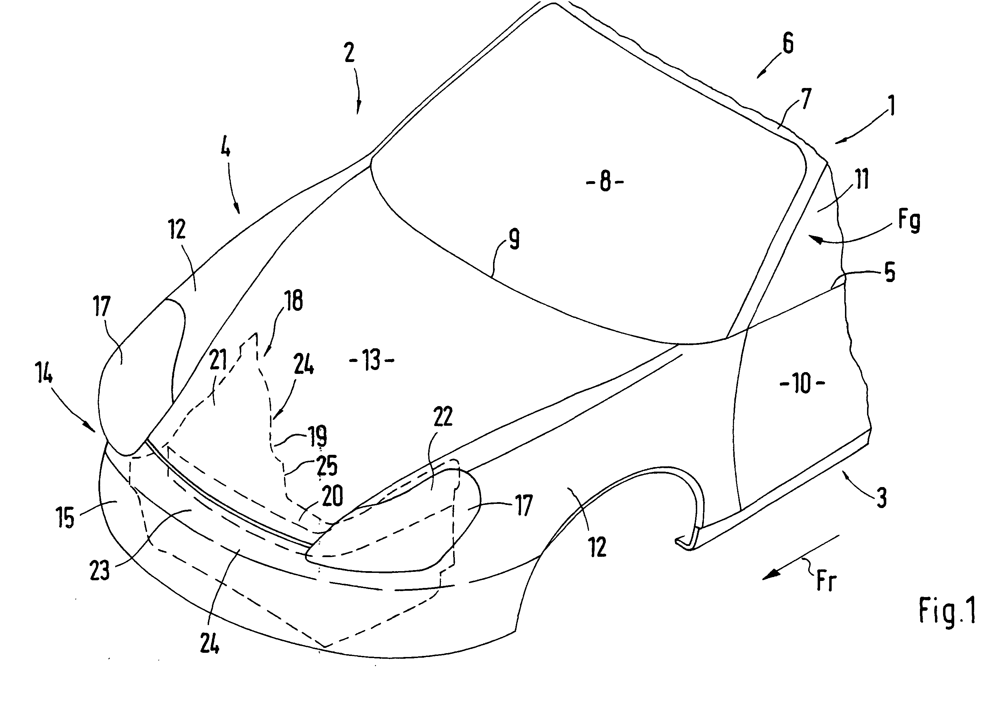

Die Fig. 1 zeigt ausschnittweise ein Kraftfahrzeug 1, insbesondere Personenwagen, mit einem Aufbau 2 mit einem hier nicht sichtbaren auch als hinteren Fahrzeugendbereich bezeichneten Heckbereich, einem Mittelteil 3, einem vorderen Fahrzeugendbereich 4 sowie einem oberhalb einer Gürtellinie 5 angeordneten Fahrzeugoberteil 6. Das Fahrzeugoberteil 6 umfasst einen umlaufenden Windschutzscheibenrahmen 7, der eine Windschutzscheibe 8 einfasst und im Bereich der Gürtellinie 5 an einen sog. Windlauf 9 angrenzt. Der Mittelteil 3 des Aufbaus 2 besitzt seitliche Türen mit jeweils einer, vorzugsweise rahmenlosen, Seitenscheibe, wobei Fig. 1 nur eine Tür 10 mit ihrer Seitenscheibe 11 zeigt.

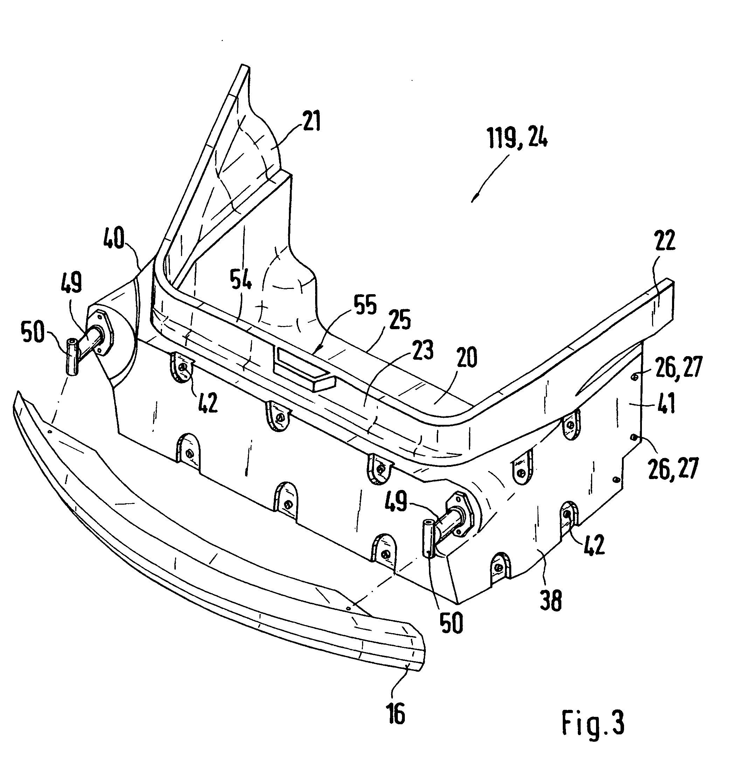

Der in Fahrtrichtung Fr vor dem Windlauf 9 angeordnete vordere Fahrzeugendbereich 4 umfasst seitliche Kotflügel 12, eine zwischen den Kotflügeln 12 angeordnete zu öffnende und zu schließende Klappe 13 sowie eine das vordere Fahrzeugende 14 bildende Verkleidung 15 für einen Stoßfänger 16 (Fig. 3). In den nachfolgend als Frontpartie bezeichneten vorderen Fahrzeugendbereich 4 sind noch Scheinwerfer 17 eingesetzt, die insbesondere in die Kotflügel 12 integriert sein können.

In der Frontpartie 4 ist ein Aufnahmeraum 18 ausgebildet, der über die Klappe 13 zugänglich ist und vorzugsweise als Kofferraum dient. Selbstverständlich ist es auch denkbar, den Aufnahmeraum 18 im hinteren, nicht dargestellten Fahrzeugendbereich anzuordnen. Der Aufnahmeraum 18 wird von einer Wanne 19 begrenzt, die von dem Aufbau 2 aufgenommen bzw. an dem Aufbau 2 befestigt ist. Die Wanne 19 mit aufrechten Wänden ist vorzugsweise rückwandfrei und zugewandt zur Klappe 13 offen ausgebildet, wobei im Zuge dieser Anmeldung rückwandfrei bedeutet, dass die Wanne auf der dem Fahrgastraum Fg zugewandten Seite offen ist. Demnach besitzt die Wanne einen Boden 20, zwei mit Abstand zueinander liegende, etwa vertikal verlaufende bzw. aufrechte Seitenwände 21 und 22 sowie eine zum vorderen Fahrzeugende 14 benachbart liegende, ebenfalls etwa vertikal verlaufende bzw. aufrechte Stirnwand 23. Die Wanne ist zumindest teilweise, d.h. der Boden 20 und/oder die Stirnwand 23 und/oder die Seitenwände 21 bzw. 22, aus einem faserverstärkten, insbesondere kohlenstofffaserverstärkten, Kunststoff hergestellt und derart ausgestaltet, dass sie bei Krafteinwirkung als deformierbares Aufprall - Deformationselement 24 wirkt, welches auch als Crashbox bezeichnet werden kann. Vorzugsweise ist die gesamte Wanne 19, also der Boden 20, die Seitenwände 21 und 22 sowie die Stirnwand 23 aus dem faserverstärkten Kunststoff einstückig oder mehrteilig hergestellt.

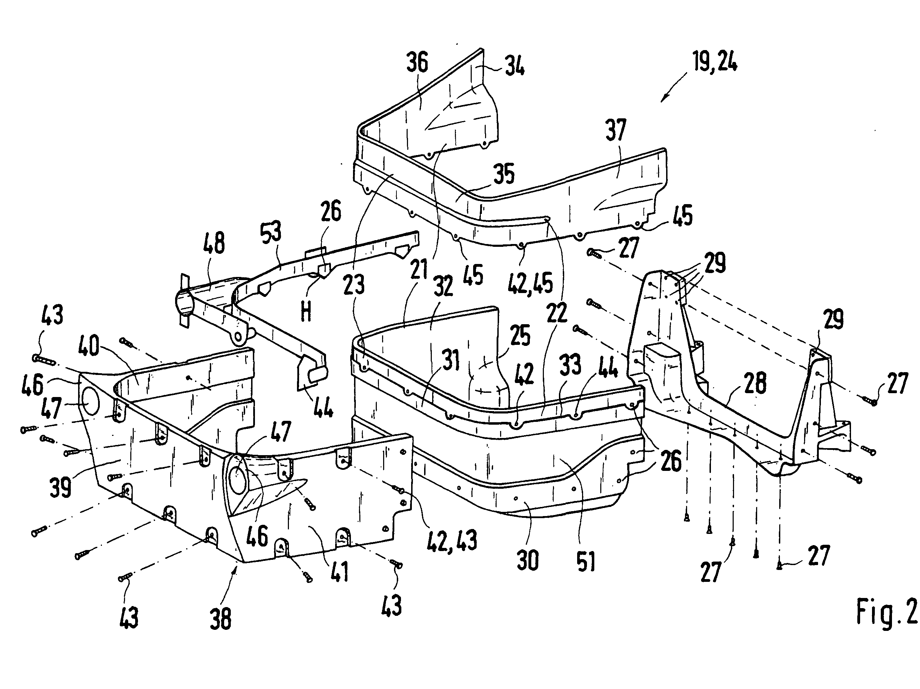

Mit ihrem rückwandfreien Ende 25, also mit den in Fahrzeuglängsrichtung verlaufenden aufrechten Wänden 21 und 22 sowie dem Boden 23, wird die Wanne 19 mit dem Aufbau 2 verbunden. Vorzugsweise bildet eine vertikal ausgerichtete Wand (nicht dargestellt) des Aufbaus 2 die Rückwand der Wanne 19 bzw. des Aufnahmeraums 18. Diese Wand kann eine unterhalb des Windlaufs 9 angeordnete Spritzwand der Fahrgastzelle sein. Selbstverständlich wäre es auch denkbar, die Wanne 19 mit einer integrierten Rückwand, vorzugsweise aus dem faserverstärkten Kunststoff, zu versehen. Für die Befestigung der Wanne 19 am Aufbau 2 sind in die Wände, beispielsweise Boden 20 und/oder Seitenwände 21 bzw. 22 und/oder Stirnwand 23, Befestigungselemente 26 eingesetzt, die vorzugsweise aus einem metallischen Werkstoff hergestellt sind. Die Befestigungselemente 26 werden insbesondere von jeweils ein Innengewinde aufweisende Hülsen H gebildet, in die vorzugsweise Außengewinde aufweisende Befestigungsmittel 27 eingeschraubt werden. Vorzugsweise ist für die Befestigung der Wanne 19 am Aufbau 2 ein Zwischenrahmen 28 vorgesehen, der beispielsweise aus einem Aluminiumguss gefertigt ist. Der Zwischenrahmen 28 ist mit dem rückwandfreien Ende 25 der Wanne 19 mittels der Befestigungselemente 26 und Befestigungsmittel 27 verbunden. Der Zwischenrahmen 28 kann eine U-förmigen Rahmenverlauf aufweisen und kann so sowohl mit dem Boden 20 als auch den Seitenwänden 21 und 22 verbunden sein. Alternativ kann der Zwischenrahmen 28 auch umlaufend ausgebildet sein, wie dies in Fig. 2 gestrichelt zu sehen ist. Ferner könnte der Zwischenrahmen 28 eine Rückwand für die Wanne 19 aufweisen. Wird der Zwischenrahmen 28 mit dem Aufbau 2 verbunden, sind vorzugsweise Befestigungsdurchbrüche 29 am Zwischenrahmen 28 vorgesehen, durch die Schrauben oder Nieten hindurchgreifen, die in dem Aufbau 2 festgelegt werden. Der Zwischenrahmen 28 dient der Verbindung der Wanne 19 mit dem Aufbau 2, unabhängig davon, ob die Wanne 19 gemäß Fig. 2 mehrteilig oder - wie in Fig. 3 dargestellt - einteilig bzw. einstückig ausgebildet ist.

Die mehrteilige Wanne 19 nach Fig. 2 besitzt ein Bodenteil 30, von dem ein Stirnwandteil 31 der Stirnwand 23 und Seitenwandteile 32 und 33 der Seitenwände 21 und 22 ausgehen. Das Bodenteil 30 ist mit einem Aufsatzteil 34 verbindbar, welches einen Stirnwandfortsatz 35 sowie Seitenwandfortsätze 36 und 37 aufweist, wobei diese Verbindung von Bodenteil und Aufsatzteil über ein Versteifungsteil 38 erfolgen kann, welches - in Draufsicht gesehen - U-förmig verläuft. Vorzugsweise ist das Versteifungsteil 38 aus dem faserverstärkten Kunststoff hergestellt. Die Basis 39 ist der Stirnwand 23 und die Schenkel 40 und 41 des Versteifungsteils 38 sind den Seitenwänden 21 bzw. 22 zugeordnet. Mithin umgreift das Versteifungsteil 38 teilweise die Wanne 19. Für die Verbindung von Bodenteil 30, Aufsatzteil 34 und Versteifungsteil 38 sind Verbindungsmittel 42 vorgesehen, die Verbindungsstifte 43, beispielsweise Schrauben oder Nieten, umfassen, die in Verbindungsstiftaufnahmen 44 der Verbindungsmittel 42 festlegbar sind, so dass das Aufsatzteil 34 und das Bodenteil 30 über das Versteifungsteil 38 miteinander verbunden sind. Für diese Verbindung können an dem Aufsatzteil 34 Laschen 45 ausgebildet sein, die zwischen dem Versteifungsteil 38 und dem Bodenteil 30 zu liegen kommen und von den Verbindungsstiften 43 durchgriffen werden. Die Verbindungsstiftaufnahmen 44 sind vorzugsweise in dem Bodenteil 30 befestigt. Sie können jedoch auch in dem Versteifungsteil 38 und/oder dem Aufsatzteil 34 vorgesehen sein. Sowohl die Verbindungsstiffe 43 als auch die Verbindungsstiftaufnahmen 44 sind vorzugsweise aus einem metallischen Werkstoff gefertigt. Die vorstehend beschriebenen Befestigungsmittel 27 bzw. Befestigungselemente 26 können auch für das Verbinden miteinander der Teile 30, 34 bzw. 38 verwendet werden. Im Übrigen können die Befestigungselemente 26 auch im Versteifungsteil 38 vorgesehen sein.

Das Versteifungsteil 38 und/oder die Wanne 19 besitzt an jedem Eckbereich eine Materialverstärkung 46, in denen Aufnahmen 47 für, vorzugsweise metallische, Anbindungsmittel 48 ausgebildet sind, die der Befestigung des Stoßfängers 16 (Fig. 3) dienen und in die Befestigungseinsätze 49 einsetzbar sind, die Befestigungsabschnitte 50 für den Stoßfänger 16 aufweisen.

Aus Fig. 2 wird deutlich, dass an der Außenseite des Bodenteils 30 und an der Innenseite des Versteifungsteil 38 Nuten 51 bzw. 52 ausgebildet sind, die bei zusammengesetzter Wanne 19 einen Kanal bilden, in den ein Halteteil 53 einlegbar ist, welches die Anbindungsmittel 48 und/oder die Befestigungselemente und/oder die Verbindungsstiftaufnahmen 44 trägt. Das Halteteil 53 kann beispielsweise als Aluminiumstreifen ausgebildet sein.

Fig. 3 zeigt ein zweites Ausführungsbeispiel einer Wanne 119, die mit ihrem Boden 20, ihren Seitenwänden 21 und 22 und ihrer Stirnwand 23 einstückig ausgebildet ist. Das Versteifungsteil 38 kann einstückig mit der Wanne 119 ausgebildet sein, oder - wie in Fig. 3 zu sehen - an der Wanne 119 mittels der vorstehend beschriebenen Verbindungsmittel 42 festgelegt sein.

Um einen Verriegelungsmechanismus für die Klappe 13 anordnen zu können, ist an der Stirnwand 23 ein Schlossträger 54 angebracht, der eine Schlossaufnahme 55 besitzt. Der Schlossträger 54 kann einen Metallrahmen aufweisen und auf die Stirnwand 23 und ggf. die Seitenwände aufgesetzt sein. Außerdem kann er eine Dichtung (nicht dargestellt) tragen, die mit der Innenseite der Klappe 13 zusammenwirkt.

## Patentansprüche

1. Kraftfahrzeug (1), insbesondere Personenwagen, mit einem in einem vorderen oder hinteren Fahrzeugendbereich (4) angeordneten Aufnahmeraum (18), der als Wanne (19, 119) ausgebildet ist, welche Wanne (19, 119) als Aufprall - Deformationselement (24) vorgesehen, rückwandfrei ausgebildet sowie mit ihrem rückwandfreien Ende (25) mit einem Aufbau (2) des Kraftfahrzeugs (1) verbunden ist, **dadurch gekennzeichnet, dass** die Wanne (19, 119) wenigstens teilweise aus einem Kunststoff hergestellt ist, der ein faserverstärkter Kunststoff ist, dass wenigstens eine zu einem vorderen oder hinteren Fahrzeugende (14) benachbart liegende Stirnwand (23) der Wanne (19, 119) aus dem faserverstärkten Kunststoff hergestellt ist, und dass der vordere oder hintere Fahrzeugendbereich (4) ohne deformierbare Längsträger auskommt.

2. Kraftfahrzeug nach Anspruch 1, **dadurch gekennzeichnet, dass** der Fahrzeugendbereich (4) die Frontpartie des Fahrzeugs (1) ist.

3. Kraftfahrzeug nach Anspruch 1, **dadurch gekennzeichnet, dass** zumindest ein Boden (20) der Wanne (19, 119) aus dem faserverstärkten Kunststoff hergestellt ist.

4. Kraftfahrzeug nach Anspruch 1, **dadurch gekennzeichnet, dass** die Wanne (19, 119) Seitenwände (21, 22) aufweist, die aus dem faserverstärkten Kunststoff hergestellt sind.

5. Kraftfahrzeug nach einem der vorhergehenden Ansprüche, **dadurch gekennzeichnet, dass** in die Wände (20, 21, 22, 23) der Wanne (19, 119) Befestigungselemente (26) eingesetzt sind.

6. Kraftfahrzeug nach Anspruch 5, **dadurch gekennzeichnet, dass** die Befestigungselemente (26) mit dem Aufbau (2) des Fahrzeugs (1) verbunden sind.

7. Kraftfahrzeug nach einem der vorhergehenden Ansprüche, **dadurch gekennzeichnet, dass** in die Wanne (19, 119) Anbindungsmittel (48) für einen Stoßfänger (16) eingesetzt sind.

8. Kraftfahrzeug nach Anspruch 1, **dadurch gekennzeichnet, dass** die Stirnwand (23) der Wanne (19) mit einem Versteifungsteil (38) aus faserverstärktem Kunststoff versehen ist.

9. Kraftfahrzeug nach Anspruch 7 oder 8, **dadurch gekennzeichnet, dass** die Anbindungsmittel (48) in dem Versteifungsteil (38) oder der Stirnwand (23) angeordnet sind.

10. Kraftfahrzeug nach Anspruch 8 oder 9, **dadurch gekennzeichnet, dass** das Versteifungsteil (38) - in Draufsicht gesehen - U-förmig ausgebildet ist und mit seiner Basis (39) der Stirnwand (23) und mit seinem beiden Schenkeln (40, 41) den Seitenwänden (21, 22) zugeordnet ist.

11. Kraftfahrzeug nach Anspruch 1, 3, 4 oder 5, **dadurch gekennzeichnet, dass** der Boden (20), die Seitenwände (21, 22) und die Stirnwand (23) der Wanne (119) aus einem Stück hergestellt sind.

12. Kraftfahrzeug nach einem der Ansprüche 1 bis 10, **dadurch gekennzeichnet, dass** der Boden (20) der Wanne (19) von einem Bodenteil (30) gebildet ist, von dem ein Stirnwandteil (31) der Stirnwand (23) und Seitenwandteile (31, 32) der Seitenwände (21, 22) ausgehen, dass für das Bodenteil (30) ein Aufsatzteil (34) vorgesehen ist, welches Aufsatzteil (34) einen Stirnwandfortsatz (35) und Seitenwandfortsätze (36) aufweist, und dass das Aufsatzteil (34) und das Bodenteil (30) über das Versteifungsteil (38) miteinander verbunden sind.

13. Kraftfahrzeug nach Anspruch 12, **dadurch gekennzeichnet, dass** das Boden- , Aufsatz- und Versteifungsteil (30, 34, 38) über, vorzugsweise metallische, Verbindungsmittel (42) aneinander befestigt sind.

14. Kraftfahrzeug nach Anspruch 12 oder 13, **dadurch gekennzeichnet, dass** die Verbindungsmittel (42) Verbindungsstiftaufnahmen (44) und in den Verbindungsstiftaufnahmen (44) festlegbare Verbindungsstifte (43) aufweisen und dass die Verbindungsstiftaufnahmen (44) in das Boden- oder Versteifungsteil (30, 38) und in das Aufsatz- oder Versteifungsteil (34, 38) eingesetzt sind.

15. Kraftfahrzeug nach zumindest einem der Ansprüche 1, 5 und 8, **dadurch gekennzeichnet, dass** der Kunststoff mit Kohlenstofffasern verstärkt ist.

16. Kraftfahrzeug nach einem der vorhergehenden Ansprüche, **dadurch gekennzeichnet, dass** die Wanne (19, 119) über eine Zwischenrahmen (28) an dem Aufbau (2) des Kraftfahrzeugs (1) befestigt ist.

17. Kraftfahrzeug nach Anspruch 16, **dadurch gekennzeichnet, dass** der Zwischenrahmen (28) aus Aluminium, insbesondere aus Aluminiumguss, hergestellt ist.

18. Kraftfahrzeug nach zumindest einem der Ansprüche 5, 16 und 17, **dadurch gekennzeichnet, dass** in der Wanne (19, 119) oder dem Versteifungsteil (38) die Befestigungsmittel (26) für den Zwischenrahmen (28) eingesetzt sind.

19. Kraftfahrzeug nach Anspruch 1, **dadurch gekennzeichnet, dass** eine Rückwand des Aufnahmeraums (18) von einer etwa senkrecht stehenden Wand des Aufbaus (2) gebildet ist.

## Claims

1. A motor vehicle (1), in particular a passenger car, with a receiving space (18) which is arranged in a front or rear end region (4) of the vehicle and which is constructed in the form of a tub (19, 119), which tub (19, 119) is provided as an impact-deformation element (24), is constructed without a back wall and is connected by its end (25) without a back wall to a body structure (2) of the motor vehicle (1), **characterized in that** the tub (19, 119) is produced at least in part from a plastics material which is a fibre-reinforced plastics material, at least one end wall (23) of the tub (19, 119) situated adjacent to a front or rear end (14) of the vehicle is produced from the fibre-reinforced plastics material, and the front or rear end region (4) of the vehicle does without a deformable longitudinal support.

2. A motor vehicle according to Claim 1, **characterized in that** the end region (4) of the vehicle is the forward structure of the vehicle (1).

3. A motor vehicle according to Claim 1, **characterized in that** at least one bottom (20) of the tub (19, 119) is produced from the fibre-reinforced plastics material.

4. A motor vehicle according to Claim 1, **characterized in that** the tub (19, 119) has lateral walls (21, 22) which are produced from the fibre-reinforced plastics material.

5. A motor vehicle according to one of the preceding Claims, **characterized in that** fastening elements (26) are inserted into the walls (20, 21, 22, 23) of the tub (19, 119).

6. A motor vehicle according to Claim 5, **characterized in that** the fastening elements (26) are connected to the body structure (2) of the vehicle (1).

7. A motor vehicle according to one of the preceding Claims, **characterized in that** attachment means (48) for a bumper (16) are inserted into the tub (19, 119).

8. A motor vehicle according to Claim 1, **characterized in that** the end wall (23) of the tub (19) is provided with a reinforcement part (38) of fibre-reinforced plastics material.

9. A motor vehicle according to Claim 7 or 8, **characterized in that** the attachment means (48) are arranged in the reinforcement part (38) or the end wall (23).

10. A motor vehicle according to Claim 8 or 9, **characterized in that** the reinforcement part (38) is made U-shaped as seen in plan view and, with its base (39), is associated with the end wall (23) and, with its two arms (40, 41), is associated with the lateral walls (21, 22).

11. A motor vehicle according to Claim 1, 3, 4 or 5, **characterized in that** the bottom (20), the lateral walls (21, 22) and the end wall (23) of the tub (119) are constructed in one piece.

12. A motor vehicle according to one of Claims 1 to 10, **characterized in that** the bottom (20) of the tub (19) is formed from a bottom part (30) from which a part (31) of the end wall (23) and parts (31, 32) [*sic - recte* (32, 33)] of the lateral walls (21, 22) extend, a mounting part (34) is provided for the bottom part (30), which mounting part (34) has an end-wall extension (35) and lateral wall extensions (36), and the mounting part (34) and the bottom part (30) are connected to each other by way of the reinforcement part (38).

13. A motor vehicle according to Claim 12, **characterized in that** the bottom part, the mounting part and the reinforcement part (30, 34, 38) are fastened to one another by way of preferably metallic connexion means (42).

14. A motor vehicle according to Claim 12 or 13, **characterized in that** the connexion means (42) have connexion-pin-receiving means (44) and connexion pins (43) which can be fixed in the connexion-pin-receiving means (44), and the connexion-pin-receiving means (44) are inserted into the bottom part or reinforcement part (30, 38) and into the mounting part or reinforcement part (34, 38).

15. A motor vehicle according to at least one of Claims 1, 5 and 8, **characterized in that** the plastics material is reinforced with carbon-reinforced fibres.

16. A motor vehicle according to one of the preceding Claims, **characterized in that** the tub (19, 119) is fastened to the body structure (2) of the motor vehicle (1) by way of a sub-frame (28).

17. A motor vehicle according to Claim 16, **characterized in that** the sub-frame (28) is produced from aluminium, in particular from cast aluminium.

18. A motor vehicle according to at least one of Claims 5, 16 and 17, **characterized in that** the fastening means (26) for the sub-frame (28) are inserted into the tub (19, 119) or the reinforcement part (38).

19. A motor vehicle according to Claim 1, **characterized in that** a rear wall of the receiving space (18) is formed by a substantially vertical wall of the body structure (2).

## Revendications

1. Véhicule automobile (1), en particulier voiture de tourisme, avec un logement (18) disposé dans une zone d'extrémité avant ou arrière (4) du véhicule, qui est réalisé comme cuve (19, 119), laquelle cuve (19, 119) est prévue comme élément de déformation (24) en cas de collision, est réalisée sans paroi arrière et est reliée par son extrémité (25) sans paroi arrière à la carrosserie (2) du véhicule automobile (1), **caractérisé en ce que** la cuve (19, 119) est fabriquée au moins en partie en une matière plastique qui est une matière plastique renforcée aux fibres, **en ce qu'**au moins une paroi frontale (23), située au voisinage d'une extrémité avant ou arrière (14) du véhicule, de la cuve (19, 119), est fabriquée dans la matière plastique renforcée aux fibres, et **en ce que** la zone d'extrémité avant ou arrière (4) du véhicule ne comporte pas de longerons déformables.

2. Véhicule automobile selon la revendication 1, **caractérisé en ce que** la zone d'extrémité (4) du véhicule est la partie avant du véhicule (1).

3. Véhicule automobile selon la revendication 1, **caractérisé en ce qu'**au moins un fond (20) de la cuve (19, 119) est fabriqué dans la matière plastique renforcée aux fibres.

4. Véhicule automobile selon la revendication 1, **caractérisé en ce que** la cuve (19, 119) comporte des parois latérales (21, 22) qui sont fabriquées dans la matière plastique renforcée aux fibres.

5. Véhicule automobile selon l'une des revendications précédentes, **caractérisé en ce que** des éléments de fixation (26) sont insérés dans les parois (20, 21, 22, 23) de la cuve (19, 119).

6. Véhicule automobile selon la revendication 5, **caractérisé en ce que** les éléments de fixation (26) sont reliés à la carrosserie (2) du véhicule (1).

7. Véhicule automobile selon l'une des revendications précédentes, **caractérisé en ce que** des moyens d'attache (48) pour un pare-chocs (16) sont insérés dans la cuve (19, 119).

8. Véhicule automobile selon la revendication 1, **caractérisé en ce que** la paroi frontale (23) de la cuve (19) est pourvue d'un raidisseur (38) en matière plastique renforcée aux fibres.

9. Véhicule automobile selon la revendication 7 ou 8, **caractérisé en ce que** les moyens d'attache (48) sont disposés dans le raidisseur (38) ou la paroi frontale (23).

10. Véhicule automobile selon la revendication 8 ou 9, **caractérisé en ce que** le raidisseur (38) - vu de dessus - présente la forme d'un U et par sa base (39) il est associé à la paroi frontale (23) et par ses deux branches (40, 41), aux parois latérales (21, 22).

11. Véhicule automobile selon la revendication 1, 3, 4 ou 5, **caractérisé en ce que** le fond (20), les parois latérales (21, 22) et la paroi frontale (23) de la cuve (119) sont réalisés d'une seule pièce.

12. Véhicule automobile selon l'une des revendications 1 à 10, **caractérisé en ce que** le fond (20) de la cuve (19) est formé par une partie de fond (30) de laquelle partent une partie (31) de la paroi frontale (23) et des parties (31, 32) des parois latérales (21, 22), **en ce que** pour la partie de fond (30) il est prévu un élément rapporté (34) lequel élément rapporté (34) comporte un prolongement de paroi frontale (35) et des prolongements de parois latérales (36), et **en ce que** l'élément rapporté (34) et la partie de fond (30) sont reliés entre eux par le raidisseur (38).

13. Véhicule automobile selon la revendication 12, **caractérisé en ce que** la partie de fond, l'élément rapporté et le raidisseur (30, 34, 38) sont fixés les uns aux autres par des moyens de liaison (42), de préférence métalliques.

14. Véhicule automobile selon la revendication 12 ou 13, **caractérisé en ce que** les moyens de liaison (42) comportent des logements pour tige de liaison (44) et des tiges de liaison (43) pouvant être fixées dans les logements (44), et **en ce que** les logements pour tige de liaison (44) sont insérés dans la partie de fond ou le raidisseur (30, 38) et dans l'élément rapporté ou le raidisseur (34, 38).

15. Véhicule automobile selon l'une au moins des revendications 1, 5 et 8, **caractérisé en ce que** la matière plastique est renforcée avec des fibres de carbone.

16. Véhicule automobile selon l'une des revendications précédentes, **caractérisé en ce que** la cuve (19, 119) est fixée, par un cadre intermédiaire (28), à la carrosserie (2) du véhicule automobile (1).

17. Véhicule automobile selon la revendication 16, **caractérisé en ce que** le cadre intermédiaire (28) est fabriqué en aluminium, en particulier en fonte d'aluminium.

18. Véhicule automobile selon l'une au moins des revendications 5, 16 et 17, **caractérisé en ce que** des moyens de fixation (26) pour le cadre intermédiaire (28) sont insérés dans la cuve (18, 119) ou dans le raidisseur (38).

19. Véhicule automobile selon la revendication 1, **caractérisé en ce qu'**une paroi arrière du logement (18) est formée par une paroi se tenant approximativement verticalement de la carrosserie (2).
